# EUROPEAN PATENT APPLICATION

(11) **EP 4 819 463 A1**
(43) Date of publication of application: **07.10.2026**
(21) Application number: 24906004.7
(22) Date of filing: 26.11.2024
(51) Int. Cl.: H02M 1/00

(54) **POWER SUPPLY MODULE, INTEGRATED CIRCUIT, POWER SUPPLY AND DEVICE**

(30) Priority: 21.12.2023 CN 202311767744
(71) Applicant: Huawei Technologies Co., Ltd., Shenzhen, Guangdong 518129 (CN)
(72) Inventor: WANG, Hengbiao, Shenzhen, Guangdong 518129 (CN); ZHAO, Dongsheng, Shenzhen, Guangdong 518129 (CN)
(74) Representative: Gill Jennings & Every LLP
(86) International application number: PCT/CN2024/134383
(87) International publication number: WO 2025/130519

(57) **Abstract**

The present invention discloses a power supply module, an integrated circuit, a power supply, and a device. The power supply module includes: a first switch circuit, where a first input end of the first switch circuit is configured to externally connect to a first power supply, a second input end of the first switch circuit is configured to externally connect to a second power supply, and an output end of the first switch circuit is electrically connected to a first power supply end of a switch control circuit; the switch control circuit, configured to control the first switch circuit to select the first power supply or the second power supply; a second switch circuit, where a first input end of the second switch circuit is configured to electrically connect to the first power supply, a second input end of the second switch circuit is configured to electrically connect to the second power supply, and an output end of the second switch circuit is electrically connected to a second power supply end of the switch control circuit; and a second switch circuit, configured to: when the power supply module is not powered on, enable the second power supply end of the switch control circuit to receive power supplied by at least one of the first power supply and the second power supply; and electrically disconnect the second power supply end of the switch control circuit from a target power supply after the power supply module is powered on. The target power supply includes a power supply selected by the first switch circuit from the first power supply and the second power supply.

## Description

This application claims priority to Chinese Patent Application No. 202311767744.1, filed with the China National Intellectual Property Administration on December 21, 2023 and entitled "POWER SUPPLY MODULE, INTEGRATED CIRCUIT, POWER SUPPLY, AND DEVICE", which is incorporated herein by reference in its entirety.

### TECHNICAL FIELD

The present invention relates to the field of power supply technologies, and in particular, to a power supply module, an integrated circuit, a power supply, and a device.

### BACKGROUND

Dual power supplies indicate that a same device has two input power supplies. When one power supply is powered off, a combiner switch of the device automatically switches to the other power supply to continue supplying power, thereby avoiding power-off of the device. When one power supply is powered off, the combiner switch automatically switches to the other input power supply. In the two input power supplies, each input power supply supplies power to a main circuit through the combiner switch and also supplies power to a combiner switch controller through a branch circuit connected to a front end of the combiner switch, thereby preventing the combiner switch from failing to switch due to power-off. To ensure that the combiner switch controller can always obtain power, the branch circuit needs to be connected to the front end of the combiner switch. As a result, an EMI (Electromagnetic Interference, electromagnetic interference) filter circuit inside a power supply module does not have a filtering function for the branch circuit. Therefore, an EMI circuit needs to be further separately configured for the branch circuit.

This causes problems of a large board area occupied by the branch circuit, low space utilization, and high power consumption.

### SUMMARY

An objective of the present invention is to provide a power supply circuit, a circuit, and a device, to resolve problems in the conventional technology that an auxiliary power supply part occupies a large board area, has low space utilization, and has high power consumption.

According to a first aspect, an embodiment of this application provides a power supply module, including a first switch circuit, a switch control circuit, and a second switch circuit. A first input end of the first switch circuit is configured to externally connect to a first power supply, and a second input end of the first switch circuit is configured to externally connect to a second power supply. An output end of the first switch circuit is electrically connected to a first power supply end of the switch control circuit, and the switch control circuit is configured to control the first switch circuit to select the first power supply or the second power supply. A first input end of the second switch circuit is configured to electrically connect to the first power supply, a second input end of the second switch circuit is configured to electrically connect to the second power supply, and an output end of the second switch circuit is electrically connected to a second power supply end of the switch control circuit. The second switch circuit is configured to, when the power supply module is not powered on, enable the second power supply end of the switch control circuit to receive power supplied by at least one of the first power supply and the second power supply. The second switch circuit is further configured to electrically disconnect the second power supply end of the switch control circuit from the target power supply after the power supply module is powered on. The target power supply includes a power supply selected by the first switch circuit from the first power supply and the second power supply.

In this embodiment, the first switch circuit is configured to select a power supply, the second switch circuit is configured to supply power by the first power supply or the second power supply to the switch control circuit as an auxiliary power supply, and the switch control circuit is configured to control the first switch circuit to select the first power supply or the second power supply. In addition, after the power supply module is powered on, the second switch circuit may be used to electrically disconnect the switch control circuit from the power supply selected by the switch control circuit. It may be understood that, after the first switch circuit selects the first power supply or the second power supply as a power-on power supply of the power supply module, the power-on power supply and the switch control circuit are in an electrically insulated state. Therefore, the second switch circuit does not cause electromagnetic interference to an input signal of the main circuit. In this way, an EMI filter circuit configured for the second switch circuit can be omitted, thereby saving power, reducing an occupied board area, and improving space utilization.

In an implementation of the first aspect, the power supply module further includes a power conversion circuit. The output end of the second switch circuit is electrically connected to the second power supply end of the switch control circuit through the power conversion circuit. An input end of the power conversion circuit is electrically connected to the output end of the second switch circuit, and an output end of the power conversion circuit is electrically connected to the second power supply end of the switch control circuit. The power conversion circuit is configured to convert a received power voltage into an operating voltage of the switch control circuit.

In this implementation, the second switch circuit is electrically connected to the switch control circuit through the power conversion circuit, so that the switch control circuit can control, under an operating voltage, the first switch to complete power supply selection, thereby ensuring power consumption safety of the switch control circuit.

In an implementation of the first aspect, the output end of the second switch circuit includes a first output end and a second output end, the first output end of the second switch circuit is configured to output a power voltage of the first power supply, and the second output end of the second switch circuit is configured to output a power voltage of the second power supply. The power conversion circuit includes a first sub-power conversion circuit and a second sub-power conversion circuit. An input end of the first sub-power conversion circuit is electrically connected to the first output end of the second switch circuit, an input end of the second sub-power conversion circuit is electrically connected to the second output end of the second switch circuit, an output end of the first sub-power conversion circuit is electrically connected to the second power supply end of the switch control circuit, and an output end of the second sub-power conversion circuit is electrically connected to the second power supply end of the switch control circuit.

In this implementation, the power voltage of the first power supply is converted into the operating voltage of the switch control circuit through the first sub-power conversion circuit, and the power voltage of the second power supply is converted into the operating voltage of the switch control circuit through the second sub-power conversion circuit. That is, two input power voltages are respectively converted into the operating voltage of the switch control circuit through power conversion circuits corresponding to the two input power voltages. This independent design can ensure that the two input power supplies are independent of each other, thereby ensuring electrical safety. In addition, this independent design can further enable two input power supplies to serve as auxiliary power supplies of each other, thereby ensuring that the switch control circuit can control the first switch circuit to select the first power supply or the second power supply.

In an implementation of the first aspect, the second switch circuit is further configured to: after the power supply module is powered on, electrically disconnect the second power supply end of the switch control circuit from the first power supply, and electrically disconnect the second power supply end of the switch control circuit from the second power supply.

In this implementation, the second switch circuit can be used to electrically disconnect the second power supply end of the switch control circuit from the two input power supplies after the power supply module is powered on, so that the second power supply end of the switch control circuit is insulated and isolated from a front end of the first switch circuit, thereby preventing the second switch circuit from generating an interference signal to a main circuit. In this way, an EMI circuit configured for the second switch circuit is omitted, and technical objectives of saving power, reducing a board area occupied by the power supply module, and improving space utilization are finally achieved.

In an implementation of the first aspect, the switch control circuit is configured to: when the power supply module is not powered on, control the second switch circuit to remain in a first state; and when the second switch circuit remains in the first state, enable the second power supply end of the switch control circuit to receive the power supplied by at least one of the first power supply and the second power supply. In addition/alternatively, the switch control circuit is configured to: when the power supply module is powered on, control the second switch circuit to remain in a second state; and when the second switch circuit remains in the second state, electrically disconnect the second power supply end of the switch control circuit from the target power supply.

In this implementation, the switch control circuit is further configured to control the second switch circuit. Therefore, a control circuit of the first switch circuit and a control circuit of the second switch circuit are integrated, to further reduce the board area occupied by the power supply module.

In an implementation of the first aspect, the second switch circuit includes a normally closed relay switch; and a first input end of the normally closed relay switch is configured to electrically connect to the first power supply, a second input end of the normally closed relay switch is configured to electrically connect to the second power supply, an output end of the normally closed relay switch is electrically connected to the second power supply end of the switch control circuit, and a control end of the normally closed relay switch is electrically connected to the switch control circuit.

In this implementation, after the power supply module is powered on, the target power supply and the second power supply end of the switch control circuit are in an electrically insulated state through the normally closed relay switch. The normally closed relay is low in cost and easy to control, and can well achieve the technical objective.

In an implementation of the first aspect, the normally closed relay switch includes a first switch, a second switch, and a control coil. An input end of the first switch is configured to electrically connect to the first power supply, and an output end of the first switch is electrically connected to the second power supply end of the switch control circuit. An input end of the second switch is configured to electrically connect to the second power supply, and an output end of the second switch is electrically connected to the second power supply end of the switch control circuit. The control coil is electrically connected to an output end of the switch control circuit, and the control coil is configured to control the first switch and the second switch to be simultaneously turned off or turned on.

In this implementation, the normally closed relay includes the first switch and the second switch, where the first switch is configured to supply power by the first power supply to the second power supply end of the switch control circuit, and the second switch is configured to supply power by the second power supply to the second power supply end of the switch control circuit. In other words, the normally closed relay includes the first switch and the second switch, so that the first power supply and the second power supply can separately supply power to the second power supply end of the switch control circuit, thereby ensuring independence of the first power supply and the second power supply, and finally ensuring electrical safety.

In an implementation of the first aspect, the control coil is configured to control the first switch and the second switch to be simultaneously turned off or turned on.

In this implementation, the control coil controls synchronization of the first switch and the second switch, thereby reducing implementation difficulty and reducing costs.

In an implementation of the first aspect, the control coil includes a first sub-control coil and a second sub-control coil, the first sub-control coil is configured to control the first switch to be turned off or turned on, and the second sub-control coil is configured to control the second switch to be turned off or turned on.

In this implementation, the first switch and the second switch are independently controlled. For example, when the first sub-control coil is faulty, the second switch can still continue to operate under control of the second control second sub-control coil, thereby ensuring that the second power supply end of the switch control circuit can receive a power voltage that is of the second power supply and that is output by the second switch, and ensuring normal operating of the switch control circuit.

In an implementation of the first aspect, the second switch circuit includes a first output end and a second output end, the second power supply end of the switch control circuit includes a first sub power supply end and a second sub power supply end, the first sub power supply end is electrically connected to the first output end of the second switch circuit, and the second sub power supply end is electrically connected to the second output end of the second switch circuit.

In this implementation, each output end of the second switch circuit is configured with a corresponding sub power supply end. When the power supply module is not powered on, if one of the sub power supply ends is faulty, the other sub power supply end can still supply power to the switch control circuit. Therefore, each output end of the second switch circuit is configured with a corresponding sub power supply end, so that a probability that the switch control circuit is powered off due to a fault of the sub power supply end can be effectively reduced.

According to a second aspect, an embodiment of this application further provides an integrated circuit. The integrated circuit includes the power supply module according to the first aspect. The integrated circuit can reduce power consumption and omit the EMI filter circuit of the second switch circuit, thereby saving space occupied by the power supply module.

According to a third aspect, an embodiment of this application provides a power supply, where the power supply includes the power supply module according to the first aspect or the integrated circuit according to the second aspect. The power supply can reduce power consumption and omit the EMI filter circuit of the second switch circuit, thereby saving space occupied by the power supply module.

According to a fourth aspect, an embodiment of this application provides a device, where the device includes the power supply module according to the first aspect, the integrated circuit according to the second aspect, or the power supply according to the third aspect. The device can reduce power consumption and omit the EMI circuit of the auxiliary power supply, thereby saving space occupied by the power supply module and improving space utilization.

In comparison with the conventional technology, in the present invention, a problem that a branch circuit generates an interference signal to a back-end circuit when a power supply circuit operates is resolved. In this application, after the power supply module is powered on, the second power supply end of the switch control circuit and the target power supply are insulated from each other through the second switch circuit. A specific implementation process is as follows: After the switch control circuit controls the first switch circuit to select the first power supply, and after the power supply module is powered on, the second switch circuit electrically insulates the second power supply end of the switch control circuit from the first power supply. After the switch control circuit controls the first switch circuit to select the second power supply, and after the power supply module is powered on, the second switch circuit electrically insulates the second power supply end of the switch control circuit from the second power supply. Therefore, power of the power supply module can be saved. In the present invention, after the power supply module is powered on, the second power supply end of the switch control circuit and the target power supply are insulated from each other, thereby fundamentally eliminating interference of an interference signal generated by the second switch circuit to an input signal of the power supply module. Therefore, the power supply module provided in the present invention may not be provided with an EMI filter circuit in the second switch circuit, thereby saving a board area occupied by the power supply module and improving space utilization.

### BRIEF DESCRIPTION OF DRAWINGS

FIG. 1 is a diagram of a power supply module that is not powered on according to an embodiment of this application, and is a diagram of a structure of a power supply circuit when a power receiving unit has power input;
FIG. 2 is a diagram of a power supply module being powered on according to an embodiment of this application;
FIG. 3 is a diagram of a power supply module being powered on according to an embodiment of this application;
FIG. 4 is a diagram of a power supply module according to an embodiment of this application;
FIG. 5 is a diagram of a power supply module according to an embodiment of this application;
FIG. 6 is a diagram of a power supply module according to an embodiment of this application; and
FIG. 7 is a diagram of a power supply module according to an embodiment of this application.

### Reference numerals:

100: power supply module; 110: first switch circuit; 111: first input end; 112: second input end; 113: output end; 120: switch control circuit; 121: first power supply end of a switch control circuit; 122: second power supply end of the switch control circuit; 130: second switch circuit; 140: normally closed relay switch; 141: first switch; 1411: first sub-switch; 142: second switch; 1421: second sub-switch; 143: control coil; 143a: first sub-control coil; 143b: second sub-control coil; 150: power conversion circuit; 151: first sub-power conversion circuit; 152: second sub-power conversion circuit; and 160: main power conversion circuit.

### DESCRIPTION OF EMBODIMENTS

The embodiments described below with reference to the accompanying drawings are examples, and are intended to explain the present invention only, but should not be construed as a limitation on the present invention.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

Before embodiments of this application are specifically described, a technical problem in the conventional technology is further explained.

In an existing power supply module, two input power supplies are undifferentiated input power supplies, in other words, there is no priority limitation between the two input power supplies. When both the two power supplies are powered, either of the two power supplies may be used to supply power to a main circuit. As a result, either of the two input power supplies always needs to be used as an auxiliary power supply of the other input power supply to supply power to a combiner switch controller. For example, in the two input power supplies, one of the two input power supplies power to the main circuit, and the power supply also serves as an auxiliary power supply of the other input power supply to supply power to the combiner switch controller. In other words, the power supply supplies power to the main circuit through the combiner switch, and needs to supply power to the combiner switch controller through a branch circuit connected before the combiner switch. For example, when A supplies power to the main circuit, A also serves as an auxiliary power supply of B to supply power to the combiner switch controller. However, when A serves as the auxiliary power supply of B, an EMI filter circuit of the main circuit cannot filter the portion (namely, the branch circuit) of A that serves as the auxiliary power supply of B. Therefore, an EMI filter circuit needs to be separately configured for the portion of A that serves as the auxiliary power supply of B to prevent interference signals generated by the input power supply. Similarly, when B supplies power to the main circuit, B also serves as an auxiliary power supply of A to supply power to the combiner switch controller. In this case, an EMI filter circuit needs to be separately configured for the portion (namely, the branch circuit) of B that serves as the auxiliary power supply of A to prevent interference signals generated by the input power supply. This causes problems of a large board area occupied by the branch circuit, and low space utilization.

In addition, when both of the two input power supplies are powered on, either of the two input power supplies serves as an auxiliary power supply of the other to supply power to the combiner switch controller. As a result, a large amount of power consumption is generated, and the separately configured EMI circuit also generates power consumption. Therefore, the existing power supply module causes a problem that the branch circuit has high power consumption.

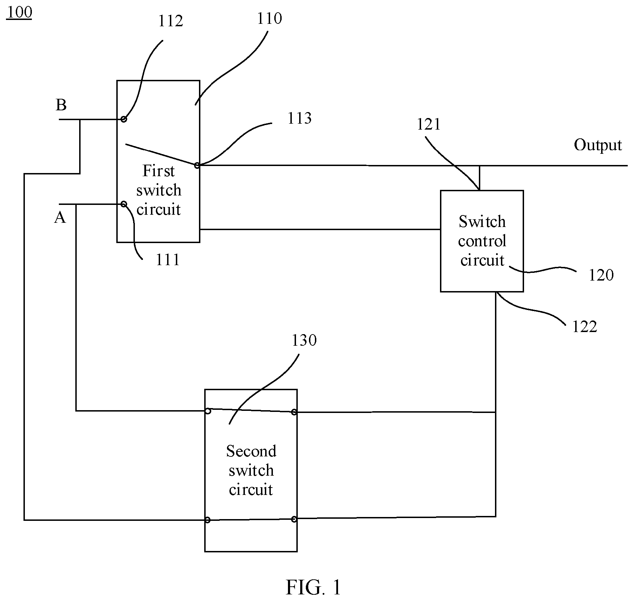

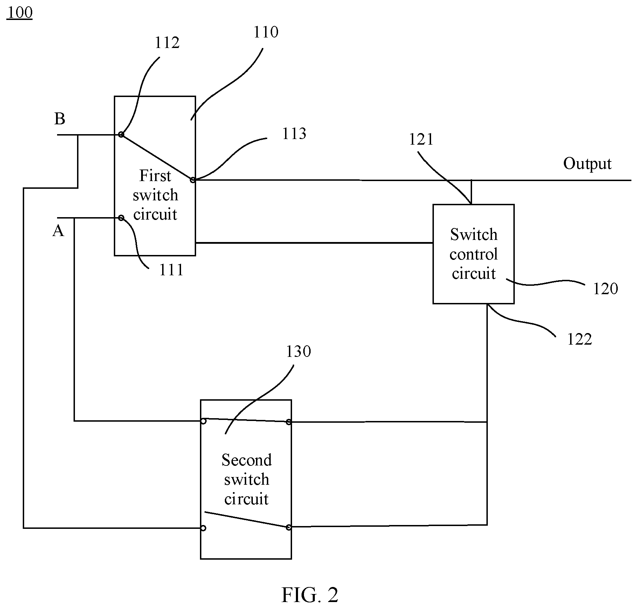

As shown in FIG. 1 to FIG. 3, an embodiment of this application provides a power supply module 100. The power supply module 100 includes a first switch circuit 110, a switch control circuit 120, and a second switch circuit 130. A first input end 111 of the first switch circuit is configured to externally connect to a first power supply A, and a second input end 112 of the first switch circuit is configured to externally connect to a second power supply B. An output end 113 of the first switch circuit is electrically connected to a first power supply end 121 of the switch control circuit, and the switch control circuit 120 is configured to control the first switch circuit 110 to select the first power supply A or the second power supply B. A first input end of the second switch circuit 130 is configured to electrically connect to the first power supply A, a second input end of the second switch circuit 130 is configured to electrically connect to the second power supply B, and an output end of the second switch circuit 130 is electrically connected to a second power supply end 122 of the switch control circuit. The second switch circuit 130 is configured to, when the power supply module 100 is not powered on, enable the second power supply end 122 of the switch control circuit to receive power supplied by at least one of the first power supply A and the second power supply B. The second switch circuit 130 is further configured to electrically disconnect the second power supply end 122 of the switch control circuit from a target power supply after the power supply module 100 is powered on. The target power supply includes a power supply selected by the first switch circuit 110 from the first power supply A and the second power supply B.

In this embodiment, that the power supply module 100 is not powered on means that the output end 113 of the first switch circuit does not output a voltage. When the first input end 111 and/or the second input end 112 of the first switch circuit is connected to a power supply, but the output end 113 of the first switch circuit is electrically insulated from the first input end 111 and the second input end 112 that are of the first switch circuit, it is considered that the power supply module 100 is not powered on. Powering on the power supply module 100 means that the output end 113 of the first switch circuit can output a power voltage of the first power supply A or a power voltage of the second power supply B. In other words, when at least one of the first power supply A or the second power supply B is powered on, the output end 113 of the first switch circuit remains in an electrical connection state with the first input end 111 or the second input end of the first switch circuit. That the first switch circuit 110 selects the first power supply A or the second power supply B means that the output end 113 of the first switch circuit selects to output the power voltage of the first power supply A or the power voltage of the second power supply B. In other words, when the output end 113 of the first switch circuit is electrically connected to the first input end 111 of the first switch circuit, the first power supply A is selected for the first switch circuit 110. When the output end 113 of the first switch circuit is electrically connected to the second input end 112 of the first switch circuit, the second power supply B is selected for the first switch circuit 110. The power supply selected by the first switch circuit 110 from the first power supply A and the second power supply B is: a power supply that is in the first power supply A and the second power supply B and that is electrically connected to the output end of the first switch circuit 110. It may be understood that the power supply selected by the first switch circuit 110 from the first power supply A and the second power supply B is a power supply. In a possible implementation, the power supply module is powered on by the target power supply.

It should be noted that, in this embodiment of this application, at a same moment, the switch control circuit 120 controls the output end 113 of the first switch circuit to be electrically connected to only one of the first input end 111 of the first switch circuit and the second input end 112 of the first switch circuit. That is, when the output end 113 of the first switch circuit is electrically connected to the first input end 111 of the first switch circuit, the output end 113 of the first switch circuit is electrically insulated from the second input end 112 of the first switch circuit. When the output end 113 of the first switch circuit is electrically connected to the second input end 112 of the first switch circuit, the output end 113 of the first switch circuit is electrically insulated from the first input end 111 of the first switch circuit.

In this embodiment, the first switch circuit 110 is configured to select a power supply, the second switch circuit 130 is configured to supply power by the first power supply A or the second power supply B to the switch control circuit 120 as an auxiliary power supply, and the switch control circuit 120 is configured to control the first switch circuit 110 to select the first power supply A or the second power supply B. In addition, after the power supply module 100 is powered on, the second switch circuit 130 may be used to electrically disconnect the switch control circuit 120 from the power supply selected by the switch control circuit 120. It may be understood that, after the first switch circuit 110 selects the first power supply A or the second power supply B as a power-on power supply of the power supply module 100, the power-on power supply and the switch control circuit 120 are in an electrically insulated state. Therefore, the second switch circuit 130 does not cause electromagnetic interference to an input signal of the main circuit. In this way, an EMI filter circuit configured for the second switch circuit 130 can be omitted, thereby saving power, reducing an occupied board area, and improving space utilization.

In an implementation of this embodiment, the second switch circuit 130 is configured to: when the power supply module 100 is not powered on, electrically connect the second power supply end 122 of the switch control circuit to the first input end of the second switch circuit 130 and the second input end of the second switch circuit 130.

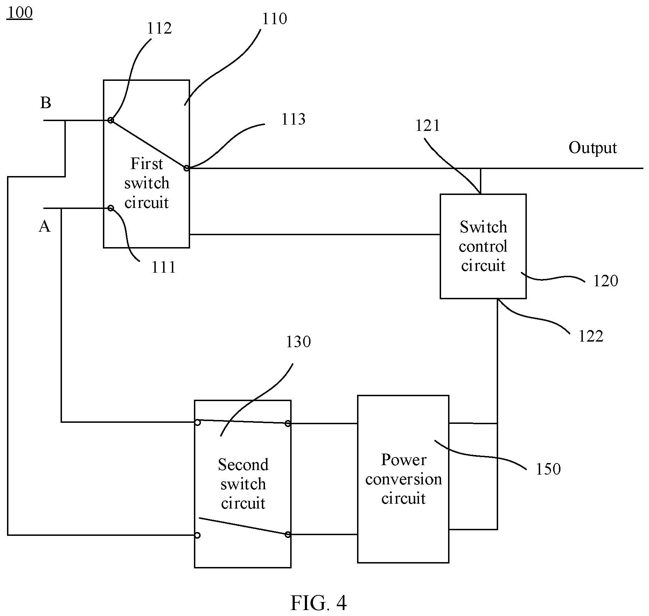

As shown in FIG. 4, in an embodiment of this application, the power supply module 100 further includes a power conversion circuit 150. An output end of the second switch circuit 130 is electrically connected to the second power supply end 122 of the switch control circuit through the power conversion circuit 150. An input end of the power conversion circuit 150 is electrically connected to the output end of the second switch circuit 130, and an output end of the power conversion circuit 150 is electrically connected to the second power supply end 122 of the switch control circuit. The power conversion circuit 150 is configured to convert the received power voltage into an operating voltage of the switch control circuit 120.

In this embodiment, when the second switch circuit 130 outputs the power voltage of the first power supply A and/or the power voltage of the second power supply B, and when the power conversion circuit 150 receives the power voltage of the first power supply A and/or the power voltage of the second power supply B, the received power voltage can be converted into a target voltage, and the target voltage is transmitted to the second power supply end 122 of the switch control circuit, to provide the target voltage to the second power supply end 122 of the switch control circuit. The target voltage is an operating voltage of the switch control circuit 120. Therefore, the power conversion circuit 150 can enable the switch control circuit 120 to operate at the operating voltage, thereby ensuring power consumption safety of the switch control circuit 120. In an implementation, the power conversion circuit includes at least one of an AC-DC circuit and a DC-DC circuit, and a specific type of the power conversion circuit including the AC-DC circuit and the DC-DC circuit may be determined according to an actual requirement. For example, when the first power supply and the second power supply are alternating current power supplies, the power conversion circuit 150 includes at least an AC-DC circuit. If the first power supply and the second power supply are direct current power supplies, the power conversion circuit 150 includes at least a DC-DC circuit.

In this embodiment, the second switch circuit 130 is electrically connected to the switch control circuit 120 through the power conversion circuit 150, so that the switch control circuit 120 can control, under an operating voltage, the first switch 141 to complete power supply selection, thereby ensuring power consumption safety of the switch control circuit 120.

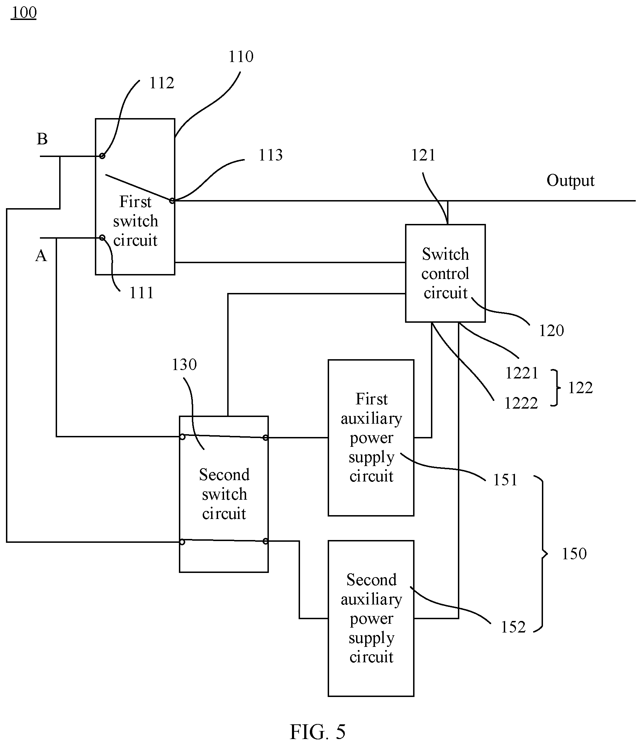

As shown in FIG. 5, in an embodiment of this application, an output end of the second switch circuit 130 includes a first output end and a second output end. The first output end of the second switch circuit 130 is configured to output the power voltage of the first power supply A, and the second output end of the second switch circuit 130 is configured to output the power voltage of the second power supply B. The power conversion circuit 150 includes a first sub-power conversion circuit 151 and a second sub-power conversion circuit 152. An input end of the first sub-power conversion circuit 151 is electrically connected to the first output end of the second switch circuit 130, an input end of the second sub-power conversion circuit 152 is electrically connected to the second output end of the second switch circuit 130, an output end of the first sub-power conversion circuit 151 is electrically connected to the second power supply end 122 of the switch control circuit, and an output end of the second sub-power conversion circuit 152 is electrically connected to the second power supply end 122 of the switch control circuit.

In an implementation of this embodiment, an input end of the second switch circuit 130 includes a first input end and a second input end, the first input end of the second switch circuit 130 is configured to electrically connect to the first power supply A, and the second input end of the second switch circuit 130 is configured to electrically connect to the second power supply B. In a possible implementation, a switch is disposed between the first input end of the second switch circuit 130 and the first output end of the second switch circuit 130, and the switch is configured to implement an electrical connection or electrical insulation between the first input end of the second switch circuit 130 and the first output end of the second switch circuit 130. A switch is disposed between the second input end of the second switch circuit 130 and the second output end of the second switch circuit 130, and the switch is configured to implement an electrical connection or electrical insulation between the second input end of the second switch circuit 130 and the second output end of the second switch circuit 130. The power voltage of the first power supply A is transmitted to the second power supply end 122 of the switch control circuit through the first input end and the first output end of the second switch circuit 130, so as to supply power to the switch control circuit 120. The power voltage of the second power supply B is transmitted to the second power supply end 122 of the switch control circuit through the second input end and the second output end of the second switch circuit 130, so as to supply power to the switch control circuit 120.

In this embodiment, after receiving the power voltage of the first power supply A, the second switch circuit 130 outputs the power voltage to the first sub-power conversion circuit 151 from the first output end of the second switch circuit 130. The power voltage of the first power supply A is converted into the target voltage by the first sub-power conversion circuit 151, and is output to the second power supply end 122 of the switch control circuit, so as to supply power to the second power supply end 122 of the switch control circuit.

In this embodiment, the power voltage of the first power supply A is converted into the operating voltage of the switch control circuit 120 through the first sub-power conversion circuit 151, and the power voltage of the second power supply B is converted into the operating voltage of the switch control circuit 120 through the second sub-power conversion circuit 152. That is, two input power voltages are respectively converted into the operating voltage of the switch control circuit 120 through power conversion circuits 150 corresponding to the two input power voltages. This independent design can ensure that the two input power supplies are independent of each other, thereby ensuring electrical safety. In addition, this independent design can further enable two input power supplies to serve as auxiliary power supplies of each other, thereby ensuring that the switch control circuit 120 can control the first switch circuit 110 to select the first power supply A or the second power supply B.

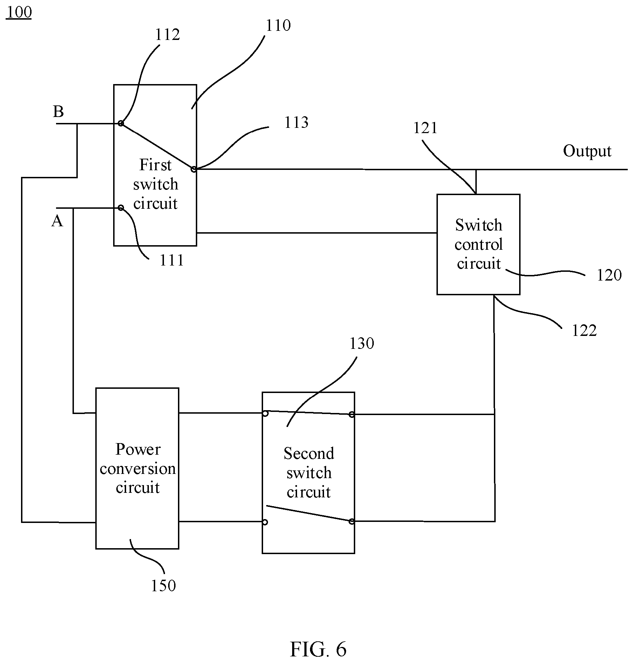

As shown in FIG. 6, in an embodiment of this application, the power supply module 100 further includes a power conversion circuit 150. An input end of the power conversion circuit 150 includes a first input end and a second input end. The first input end of the power conversion circuit 150 is configured to electrically connect to the first power supply A, and the second input end of the power conversion circuit 150 is configured to electrically connect to the second power supply B. An output end of the power conversion circuit 150 includes a first output end and a second output end. The first output end of the power conversion circuit 150 is electrically connected to the first input end of the second switch circuit 130, and the second output end of the power conversion circuit 150 is electrically connected to the second input end of the second switch circuit 130. The power conversion circuit 150 is configured to convert the received power voltage into an operating voltage of the switch control circuit 120.

In this embodiment, the first input end of the second switch circuit 130 is electrically connected to the first power supply A through the first input end of the power conversion circuit 150, and the second input end of the second switch circuit 130 is electrically connected to the second power supply B through the second input end of the power conversion circuit 150.

In this embodiment, when the second switch circuit 130 outputs the power voltage of the first power supply A and/or the power voltage of the second power supply B, and when the power conversion circuit 150 receives the power voltage of the first power supply A and/or the power voltage of the second power supply B, the received power voltage can be converted into a target voltage, and the target voltage is transmitted to the second power supply end 122 of the switch control circuit, to provide the target voltage to the second power supply end 122 of the switch control circuit. The target voltage is an operating voltage of the switch control circuit 120. Therefore, the power conversion circuit 150 can enable the switch control circuit 120 to operate at the operating voltage, thereby ensuring power consumption safety of the switch control circuit 120.

In an embodiment of this application, an output end of the second switch circuit 130 includes a first output end and a second output end. The first output end of the second switch circuit 130 is configured to output the power voltage of the first power supply A, and the second output end of the second switch circuit 130 is configured to output the power voltage of the second power supply B. The power conversion circuit 150 includes a first sub-power conversion circuit 151 and a second sub-power conversion circuit 152. An input end of the first sub-power conversion circuit 151 is configured to electrically connect to the first power supply A, an output end of the first sub-power conversion circuit 151 is electrically connected to the first input end of the second switch circuit 130, the first output end of the second switch circuit 130 is electrically connected to the second power supply end 122 of the switch control circuit, an input end of the second sub-power conversion circuit 152 is configured to electrically connect to the second power supply B, an output end of the second sub-power conversion module is electrically connected to the second input end of the second switch circuit 130, and the second output end of the second switch circuit 130 is electrically connected to the second power supply end 122 of the switch control circuit.

In an implementation of this embodiment, an input end of the second switch circuit 130 includes a first input end and a second input end, the first input end of the second switch circuit 130 is configured to electrically connect to the first power supply A, and the second input end of the second switch circuit 130 is configured to electrically connect to the second power supply B. In a possible implementation, a switch is disposed between the first input end of the second switch circuit 130 and the first output end of the second switch circuit 130, and the switch is configured to implement an electrical connection or electrical insulation between the first input end of the second switch circuit 130 and the first output end of the second switch circuit 130. A switch is disposed between the second input end of the second switch circuit 130 and the second output end of the second switch circuit 130, and the switch is configured to implement an electrical connection or electrical insulation between the second input end of the second switch circuit 130 and the second output end of the second switch circuit 130. The power voltage of the first power supply A is converted into a target voltage through the first sub-power conversion circuit 151, and the target voltage is transmitted to the second power supply end 122 of the switch control circuit through the first input end and the first output end of the second switch circuit 130, so as to provide an operating voltage for the switch control circuit 120. The power voltage of the second power supply B is converted into a target voltage through the second sub-power conversion circuit 152, and the target voltage is transmitted to the second power supply end 122 of the switch control circuit through the second input end and the second output end of the second switch circuit 130, so as to supply power to the switch control circuit 120.

In this embodiment, the power voltage of the first power supply A is converted into the operating voltage of the switch control circuit 120 through the first sub-power conversion circuit 151, and the power voltage of the second power supply B is converted into the operating voltage of the switch control circuit 120 through the second sub-power conversion circuit 152. That is, two input power voltages are respectively converted into the operating voltage of the switch control circuit 120 through power conversion circuits 150 corresponding to the two input power voltages. This independent design can ensure that the two input power supplies are independent of each other, thereby ensuring electrical safety. In addition, this independent design can further enable two input power supplies to serve as auxiliary power supplies of each other, thereby ensuring that the switch control circuit 120 can control the first switch circuit 110 to select the first power supply A or the second power supply B.

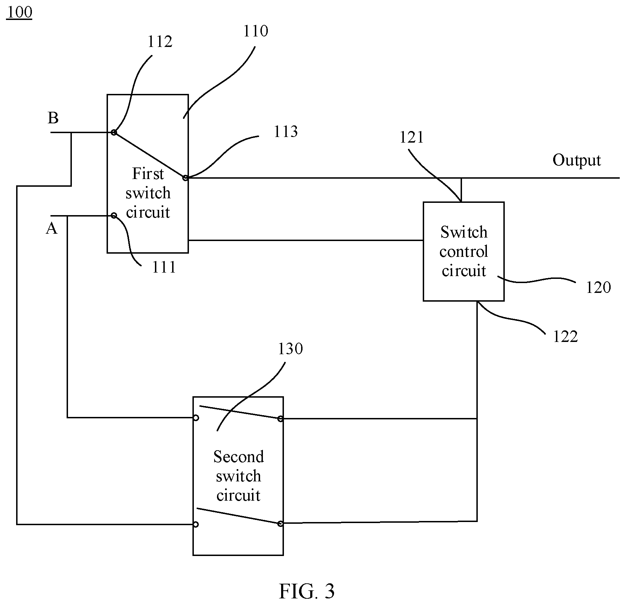

Refer to FIG. 3. In an embodiment of this application, the second switch circuit 130 is further configured to: after the power supply module 100 is powered on, electrically disconnect the second power supply end 122 of the switch control circuit from the first power supply A, and electrically disconnect the second power supply end 122 of the switch control circuit from the second power supply B.

In this embodiment, after the power supply module 100 is powered on, transmission of the power voltage of the first power supply A to the second power supply end 122 of the switch control circuit can be blocked by the second switch circuit 130, and transmission of the power voltage of the second power supply B to the second power supply end 122 of the switch control circuit can be blocked. In a possible implementation, after the power supply module 100 is powered on, the input end and the output end of the second switch circuit 130 are electrically insulated from each other, to electrically disconnect the second power supply end 122 of the switch control circuit from the first power supply A, and electrically disconnect the second power supply end 122 of the switch control circuit from the second power supply B, thereby saving power. In addition, after the power supply module 100 is powered on, the second power supply end 122 of the switch control circuit and two output power supplies are in an electrically insulated state, in other words, the second switch circuit 130 does not interfere with an input signal of the power supply module 100. Therefore, an EMI filter circuit configured for the second switch circuit 130 can be omitted, thereby reducing a board area occupied by the power supply module 100.

In this embodiment, the second switch circuit 130 can be used to electrically disconnect the second power supply end 122 of the switch control circuit from the two input power supplies after the power supply module 100 is powered on, so that the second power supply end 122 of the switch control circuit is insulated and isolated from a front end of the first switch circuit 110, thereby preventing the second switch circuit 130 from generating an interference signal to a main circuit. In this way, an EMI circuit configured for the second switch circuit 130 is omitted, and technical objectives of saving power, reducing a board area occupied by the power supply module 100, and improving space utilization are finally achieved.

As shown in FIG. 5, in an embodiment of this application, the switch control circuit 120 is configured to: control, when the power supply module 100 is not powered on, the second switch circuit 130 to remain in the first state; and when the second switch circuit 130 remains in the first state, enable the second power supply end 122 of the switch control circuit to receive the power supplied by at least one of the first power supply A and the second power supply B. In addition/alternatively, the switch control circuit 120 is configured to: when the power supply module 100 is powered on, control the second switch circuit 130 to remain in a second state; and when the second switch circuit 130 remains in the second state, electrically disconnect the second power supply end 122 of the switch control circuit from the target power supply.

In an implementation of this embodiment, the second switch 142 includes a circuit configured to electrically connect the first input end of the second switch circuit 130 to the second power supply end 122 of the switch control circuit, and a circuit configured to electrically connect the second input end of the second switch circuit 130 to the second power supply end 122 of the switch control circuit. The circuit configured to electrically connect the first input end of the second switch circuit 130 to the second power supply end 122 of the switch control circuit and the circuit configured to electrically connect the second input end of the second switch circuit 130 to the second power supply end 122 of the switch control circuit may be separately turned on or off through a switch (including a mechanical switch or a semiconductor switch). The switch control circuit 120 may control the mechanical switch or the semiconductor switch, so that the second switch circuit 130 remains in the first state or remains in the second state. In an implementation, the first state of the second switch 142 includes: Both a circuit configured to electrically connect the first input end of the second switch circuit 130 to the second power supply end 122 of the switch control circuit, and a circuit configured to electrically connect the second input end of the second switch circuit 130 to the second power supply end 122 of the switch control circuit are in a connected state. For example, the circuit configured to electrically connect the first input end of the second switch circuit 130 to the second power supply end 122 of the switch control circuit or the circuit configured to electrically connect the second input end of the second switch circuit 130 to the second power supply end 122 of the switch control circuit is in a connected state. In this case, the switch control circuit 120 can be powered through the first power supply A or the second power supply B. For another example, the circuit configured to electrically connect the first input end of the second switch circuit 130 to the second power supply end 122 of the switch control circuit and the circuit configured to electrically connect the second input end of the second switch circuit 130 to the second power supply end 122 of the switch control circuit are both in a connected state. In this case, the switch control circuit 120 can be powered through at least one of the first power supply A and the second power supply B. When both the first power supply A and the second power supply B are in a power-on state, the switch control circuit 120 can be powered through the first power supply A and the second power supply B.

In an implementation of this embodiment, the second state of the second circuit 130 includes: A circuit configured to electrically connect the target power supply to the second power supply end 122 of the switch control circuit is in a disconnected state. The target power supply cannot supply power to the second power supply end 122 of the switch control circuit, that is, the target power supply cannot supply power to the switch control circuit 120 through the second power supply end 122 of the switch control circuit.

In this embodiment, the switch control circuit 120 is further configured to control the second switch circuit 130. Therefore, a control circuit of the first switch circuit 110 and a control circuit of the second switch circuit 130 are integrated, to further reduce the board area occupied by the power supply module 100.

In an implementation of this embodiment, the circuit configured to electrically connect the first input end of the second switch circuit 130 to the second power supply end 122 of the switch control circuit includes a semiconductor switch. A control end of the semiconductor switch is electrically connected to the switch control circuit 120. A circuit configured to electrically connect the second input end of the second switch circuit 130 to the second power supply end 122 of the switch control circuit includes a semiconductor switch, where a control end of the semiconductor switch is electrically connected to the switch control circuit 120. The semiconductor switch facilitates circuit integration, and saves the board area occupied by the power supply module 100.

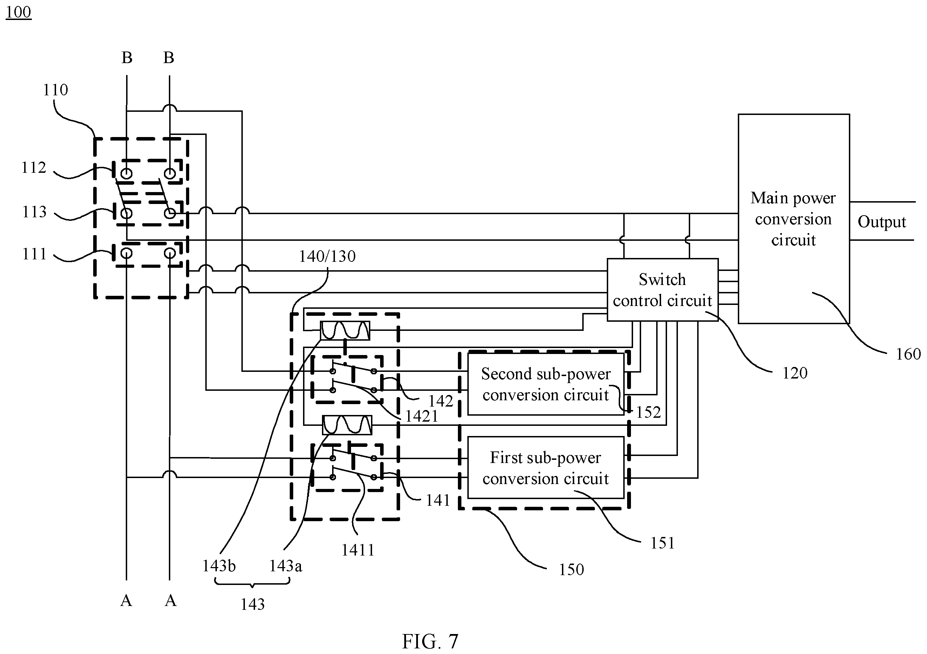

As shown in FIG. 7, in an embodiment of this application, the second switch circuit 130 includes a normally closed relay switch 140. A first input end of the normally closed relay switch 140 is configured to electrically connect to the first power supply A, a second input end of the normally closed relay switch 140 is configured to electrically connect to the second power supply B, an output end of the normally closed relay switch 140 is electrically connected to the second power supply end 122 of the switch control circuit, and a control end of the normally closed relay switch 140 is electrically connected to the switch control circuit 120.

When no electrical signal passes through a control coil of a normally closed relay, a switch of the normally closed relay is in a turned-on state. When an electrical signal passes through the control coil of the normally closed relay, the switch of the normally closed relay is in a turnedoff state. Therefore, the normally closed relay can well implement the following: When the power supply module 100 is not powered on, the second power supply end 122 of the switch control circuit receives power supplied by at least one of the first power supply A and the second power supply B. After the power supply module 100 is powered on, the second power supply end 122 of the switch control circuit is electrically disconnected from the target power supply. The target power supply includes a power supply selected by the first switch circuit 110 from the first power supply A and the second power supply B. It may be understood that, the target power supply supplies power to the second power supply end 122 of the switch control circuit only through the second switch circuit 130 in a process of powering on the power supply module 100, and stops supplying power after the power supply module 100 is powered on, thereby saving power. In addition, an EMI circuit configured for the second switch circuit 130 may be omitted.

In this implementation, after the power supply module 100 is powered on, the target power supply and the second power supply end 122 of the switch control circuit are in an electrically insulated state through the normally closed relay switch 140. The normally closed relay is low in cost and easy to control, and can well achieve the technical objective.

As shown in FIG. 7, in an embodiment of this application, the normally closed relay switch 140 includes a first switch 141, a second switch 142, and a control coil 143. An input end of the first switch 141 is configured to electrically connect to the first power supply A, and an output end of the first switch 141 is electrically connected to the second power supply end 122 of the switch control circuit. An input end of the second switch 142 is configured to electrically connect to the second power supply B, and an output end of the second switch 142 is electrically connected to the second power supply end 122 of the switch control circuit. The control coil is electrically connected to an output end of the switch control circuit 120, and the control coil is configured to control the first switch 141 and the second switch 142 to be turned off or turned on. The input end of the first switch 141 is the first input end of the second switch circuit 130. The input end of the second switch 142 is the input end of the second switch circuit 130.

In a possible implementation of this embodiment, the output end of the first switch 141 is electrically connected to the second power supply end 122 of the switch control circuit through the first sub-power conversion circuit 151. The output end of the second switch 142 is electrically connected to the second power supply end 122 of the switch control circuit through the second sub power supply circuit. The first sub-power conversion module is configured to convert the power voltage of the first power supply A into a target voltage, and the second sub-power conversion module is configured to convert the power voltage of the second power supply B into the target voltage. The target voltage is an operating voltage of the switch control circuit 120. When no current flows through the control coil, the first switch 141 and the second switch 142 are turned on, so that at least one of the first power supply A and the second power supply B supplies power to the second power supply end 122 of the switch control circuit. When a current flows through the control coil, the first switch 141 and the second switch 142 are turned off, so that the target power supply cannot supply power to the second power supply end 122 of the switch control circuit.

In a possible implementation of this embodiment, the output end of the switch control circuit 120 is configured to not perform outputting externally when the first power supply end 121 of the switch control circuit does not receive power and the second power supply end 122 of the switch control circuit receives power. The output end of the switch control circuit 120 is further configured to output a current to the control coil when the first power supply end 121 of the switch control circuit receives power from the target power supply. Therefore, when the power supply module 100 is not powered on, the first power supply end 121 of the switch control circuit receives no power, the second power supply end 122 of the switch control circuit receives power through the control circuit 120 of the second switch 142, the output end of the switch control circuit 120 does not perform outputting externally, no current flows through the control coil, the first switch 141 and the second switch 142 are in a turned-on state, and the second power supply end 122 of the switch control circuit receives power supplied by at least one of the first power supply A and the second power supply B. In this way, the switch control circuit 120 can control the first switch circuit 110 to select the first power supply A or the second power supply B. After the switch control circuit 120 controls the first switch circuit 110 to select the target power supply, the target power supply supplies power to the first power supply end 121 of the switch control circuit through the first switch circuit 110, the output end of the switch control circuit 120 outputs a current, and the current flows through the control coil. One of the first switch 141 and the second switch 142 that is electrically connected to the target power supply is turned off, to electrically disconnect the target power supply from the second power supply end 122 of the switch control circuit.

In this embodiment, the normally closed relay includes the first switch 141 and the second switch 142. The first switch 141 is configured to supply power by the first power supply A to the second power supply end 122 of the switch control circuit, and the second switch 142 is configured to supply power by the second power supply B to the second power supply end 122 of the switch control circuit. In other words, the normally closed relay includes the first switch 141 and the second switch 142, so that the first power supply A and the second power supply B can separately supply power to the second power supply end 122 of the switch control circuit, thereby ensuring independence of the first power supply A and the second power supply B, and finally ensuring electrical safety.

In an embodiment of this application, the control coil is configured to control both the first switch 141 and the second switch 142 to be turned off or turned on.

In this embodiment, the control coil 143 can synchronously control the first switch 141 and the second switch 142. In a possible implementation, the control coil 143 includes one sub-control coil, and the sub-control coil can control both the first switch 141 and the second switch 142. Alternatively, in another possible implementation, the control coil 143 includes two sub-control coils, one of the two sub-control coils controls the first switch 141, the other controls the second switch 142, and both the two sub-control coils are electrically connected to a same output end of the switch control circuit 120, thereby ensuring synchronization. Alternatively, in another possible implementation, the control coil includes a plurality of control coils, and each control coil can control the first switch 141 and the second switch 142. Therefore, as long as one of the plurality of control coils can operate normally, it can be ensured that the first switch 141 and the second switch 142 are normally turned off or turned on, thereby reducing a fault occurrence probability.

In this implementation, the control coil 143 controls synchronization of the first switch 141 and the second switch 142, thereby reducing implementation difficulty, and reducing costs.

In an embodiment of this application, the control coil 143 includes a first sub-control coil 143a and a second sub-control coil 143b. The first sub-control coil 143a is configured to control the first switch 141 to be turned off or turned on, and the second sub-control coil 143b is configured to control the second switch 142 to be turned off or turned on.

In a possible implementation, both the first sub-control coil 143a and the second sub-control coil 143b are electrically connected to a same output end of the switch control circuit 120. In this case, the first sub-control coil 143a and the second sub-control coil 143b can implement synchronous control on the first switch 141 and the second switch 142.

In a possible implementation, the output end of the switch control circuit 120 includes a first output end and a second output end. The first sub-control coil is electrically connected to the first output end of the switch control circuit 120, and the second sub-control coil is electrically connected to the second output end of the switch control circuit 120. The first sub-control coil 143a and the second sub-control coil 143b can implement asynchronization between the first switch 141 and the second switch 142. For example, a control switch is added before the first output end of the switch control circuit 120, and the control switch is controlled by the switch control circuit 120. When the first power supply A supplies power to the second power supply end 122 of the switch control circuit through the first switch 141, the control switch is turned on and remains turned on until the control circuit controls the first switch 141 to reselect a target power supply. When the first power supply end 121 of the switch control circuit receives power, a current flows from the first output end to the first sub-control coil 143a through the control switch, and the first switch 141 is turned off. A control switch is added before the second output end of the switch control circuit 120, and the control switch is controlled by the switch control circuit 120. When the second power supply B supplies power to the second power supply end 122 of the switch control circuit through the second switch 142, the control switch is turned on and remains turned on until the control circuit controls the first switch 141 to reselect a target power supply. When the first power supply end 121 of the switch control circuit receives power, a current flows from the first output end to the second sub-control coil 143b through the control switch, and the second switch 142 is turned off.

In this implementation, the first switch 141 and the second switch 142 are independently controlled. For example, when the first sub-control coil 143a is faulty, the second switch 142 can still continue to operate under control of the second sub-control coil 143b, thereby ensuring that the second power supply end 122 of the switch control circuit can receive a power voltage that is of the second power supply B and that is output by the second switch 142, and ensuring normal operating of the switch control circuit 120.

In an embodiment of this application, an output end of the second switch circuit 130 includes a first output end and a second output end. The first output end of the second switch circuit 130 is configured to output the power voltage of the first power supply A, and the second output end of the second switch circuit 130 is configured to output the power voltage of the second power supply B. The second power supply end 122 of the switch control circuit includes a first sub power supply end 1221 and a second sub power supply end 1222. The first sub power supply end 1221 is electrically connected to the first output end of the second switch circuit 130, and the second sub power supply end 1222 is electrically connected to the second output end of the second switch circuit 130.

In this embodiment, each output end of the second switch circuit 130 is configured with a corresponding sub power supply end. When the power supply module 100 is not powered on, if one of the sub power supply ends is faulty, the other sub power supply end can still supply power to the switch control circuit 120. Therefore, each output end of the second switch circuit 130 is configured with a corresponding sub power supply end, so that a probability that the switch control circuit 120 is powered off due to a fault of the sub power supply end can be effectively reduced.

It should be noted that, in this application, the input end of the first switch 141 and the input end of the second switch 142 in the normally closed relay switch 140 are input ends of an electrical signal (for example, a current signal or a voltage signal), and the output end of the first switch 141 and the output end of the second switch 142 are output ends of an electrical signal (for example, a current signal or a voltage signal). Therefore, the input end/input end of the first switch 141 and the second switch 142 is merely an example for description, and is not specifically limited.

In a possible implementation, the first switch 141 includes two first sub-switches 1411, where the two first sub-switches 1411 are configured to electrically connect to two pole lines of the first power supply A in a one-to-one correspondence. The second switch 142 includes two second sub-switches 1421, where the two second sub-switches 1421 are configured to electrically connect to two pole lines of the second power supply B in a one-to-one correspondence.

In an embodiment of this application, the power supply module 100 further includes a main power conversion circuit 160, and the main power conversion circuit is configured to provide an operating voltage for a back-end main circuit. The output end 113 of the first switch circuit is electrically connected to the input end of the main power conversion circuit 160, and the output end of the main power conversion circuit 160 is electrically connected to a back-end circuit.

In an embodiment of this application, the switch control circuit 120 is further electrically connected to the main power conversion circuit 160. The switch control circuit 120 forms a loop by using some components in the main power conversion circuit. This design can simplify a circuit structure of the switch control circuit.

An embodiment of this application further provides an integrated circuit. The integrated circuit includes the power supply module 100 provided in the foregoing embodiment. The integrated circuit can reduce power consumption and omit an EMI filter circuit of the second switch circuit 130, thereby saving space occupied by the power supply module 100.

An embodiment of this application provides a power supply. The power supply includes the power supply module 100 provided in the foregoing embodiment or the integrated circuit provided in the foregoing embodiment. The power supply can reduce power consumption and omit an EMI filter circuit of the second switch circuit 130, thereby saving space occupied by the power supply module 100 and improving space utilization.

An embodiment of this application provides a device. The device includes the power supply module 100 provided in the foregoing embodiment, the integrated circuit provided in the foregoing embodiment, or the power supply provided in the foregoing embodiment. The device can reduce power consumption and omit an EMI circuit of an auxiliary power supply, thereby saving space occupied by the power supply module 100 and improving space utilization.

The foregoing describes in detail the structure, features, and effects of the present invention according to the embodiments shown in the figures. The foregoing descriptions are merely example embodiments of the present invention, but the present invention does not limit the implementation scope as shown in the figures. Any change made according to the concept of the present invention or modification to an equivalent embodiment with an equivalent change shall fall within the protection scope of the present invention if the change does not go beyond the spirit covered by the specification and the figures.

## Claims

1. A power supply module, comprising:
a first switch circuit, wherein a first input end of the first switch circuit is configured to externally connect to a first power supply, and a second input end of the first switch circuit is configured to externally connect to a second power supply;
a switch control circuit, wherein an output end of the first switch circuit is electrically connected to a first power supply end of the switch control circuit, and the switch control circuit is configured to control the first switch circuit to select the first power supply or the second power supply; and
a second switch circuit, wherein a first input end of the second switch circuit is configured to electrically connect to the first power supply, a second input end of the second switch circuit is configured to electrically connect to the second power supply, and an output end of the second switch circuit is electrically connected to a second power supply end of the switch control circuit, wherein
the second switch circuit is configured to, when the power supply module is not powered on, enable the second power supply end of the switch control circuit to receive power supplied by at least one of the first power supply and the second power supply; and
the second switch circuit is further configured to electrically disconnect the second power supply end of the switch control circuit from a target power supply after the power supply module is powered on, wherein the target power supply comprises a power supply selected by the first switch circuit from the first power supply and the second power supply.

2. The power supply module according to claim 1, further comprising a power conversion circuit, wherein the output end of the second switch circuit is electrically connected to the second power supply end of the switch control circuit through the power conversion circuit;
an input end of the power conversion circuit is electrically connected to the output end of the second switch circuit, and an output end of the power conversion circuit is electrically connected to the second power supply end of the switch control circuit; and
the power conversion circuit is configured to convert a received power voltage into an operating voltage of the switch control circuit.

3. The power supply module according to claim 2, wherein
the output end of the second switch circuit comprises a first output end and a second output end, the first output end of the second switch circuit is configured to output a power voltage of the first power supply, and the second output end of the second switch circuit is configured to output a power voltage of the second power supply; and
the power conversion circuit comprises a first sub-power conversion circuit and a second sub-power conversion circuit, wherein an input end of the first sub-power conversion circuit is electrically connected to the first output end of the second switch circuit, an input end of the second sub-power conversion circuit is electrically connected to the second output end of the second switch circuit, an output end of the first sub-power conversion circuit is electrically connected to the second power supply end of the switch control circuit, and an output end of the second sub-power conversion circuit is electrically connected to the second power supply end of the switch control circuit.

4. The power supply module according to claim 1, wherein the second switch circuit is further configured to: after the power supply module is powered on, electrically disconnect the second power supply end of the switch control circuit from the first power supply, and electrically disconnect the second power supply end of the switch control circuit from the second power supply.

5. The power supply module according to claim 1, wherein the switch control circuit is configured to: when the power supply module is not powered on, control the second switch circuit to remain in a first state; and when the second switch circuit remains in the first state, enable the second power supply end of the switch control circuit to receive the power supplied by at least one of the first power supply and the second power supply; and/or
the switch control circuit is configured to: when the power supply module is powered on, control the second switch circuit to remain in a second state; and when the second switch circuit remains in the second state, electrically disconnect the second power supply end of the switch control circuit from the target power supply.

6. The power supply module according to claim 1, wherein the second switch circuit comprises a normally closed relay switch;
a first input end of the normally closed relay switch is configured to electrically connect to the first power supply, a second input end of the normally closed relay switch is configured to electrically connect to the second power supply, an output end of the normally closed relay switch is electrically connected to the second power supply end of the switch control circuit, and a control end of the normally closed relay switch is electrically connected to the switch control circuit.

7. The power supply module according to claim 6, wherein the normally closed relay switch comprises:
a first switch, wherein an input end of the first switch is configured to electrically connect to the first power supply, and an output end of the first switch is electrically connected to the second power supply end of the switch control circuit;
a second switch, wherein an input end of the second switch is configured to electrically connect to the second power supply, and an output end of the second switch is electrically connected to the second power supply end of the switch control circuit; and
a control coil, wherein the control coil is electrically connected to an output end of the switch control circuit, and the control coil is configured to control the first switch and the second switch to be turned off or turned on.

8. The power supply module according to claim 7, wherein the control coil is configured to control the first switch and the second switch to be simultaneously turned off or turned on.

9. The power supply module according to claim 7, wherein the control coil comprises a first sub-control coil and a second sub-control coil, the first sub-control coil is configured to control the first switch to be turned off or turned on, and the second sub-control coil is configured to control the second switch to be turned off or turned on.

10. The power supply module according to claim 1, wherein the output end of the second switch circuit comprises a first output end and a second output end, the second power supply end of the switch control circuit comprises a first sub power supply end and a second sub power supply end, the first sub power supply end is electrically connected to the first output end of the second switch circuit, and the second sub power supply end is electrically connected to the second output end of the second switch circuit.

11. An integrated circuit, wherein the integrated circuit comprises the power supply module according to any one of claims 1 to 10.

12. A power supply, wherein the power supply comprises the power supply module according to any one of claims 1 to 10 or the integrated circuit according to claim 11.

13. A device, wherein the device comprises the power supply module according to any one of claims 1 to 10, the integrated circuit according to claim 11, or the power supply according to claim 12.
